(19) **Europäisches Patentamt / European Patent Office / Office européen des brevets**

(11) **EP 3 054 416 B1**

(12) **EUROPEAN PATENT SPECIFICATION**

(45) Date of publication and mention
of the grant of the patent:
**28.11.2018  Bulletin 2018/48**

(51) Int Cl.:
*G06T 5/00* (2006.01)       *G06T 5/40* (2006.01)
*H04N 1/407* (2006.01)      *H04N 5/202* (2006.01)
*H04N 9/69* (2006.01)

(21) Application number: **15154172.9**

(22) Date of filing: **06.02.2015**

(54) **Method, system and device for generating more natural images**

Verfahren, System und Vorrichtung zur Erzeugung natürlicherer Bilder

Procédé, système et dispositif pour générer des images plus naturelles

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.08.2016  Bulletin 2016/32**

(73) Proprietor: **Universitat Pompeu Fabra
08002 Barcelona (ES)**

(72) Inventors:
• **Bertalmio Barate, Marcelo José
  08002 BARCELONA (ES)**
• **Kane, David
  08002 BARCELONA (ES)**
• **Cyriac, Praveen
  08002 BARCELONA (ES)**

(74) Representative: **Isern Patentes y Marcas S.L.
Avda. Diagonal, 463 Bis, 2°
08036 Barcelona (ES)**

(56) References cited:
**US-A1- 2007 104 387**

• **YI-SHENG CHIU ET AL: "Efficient contrast
enhancement using adaptive gamma correction
and cumulative intensity distribution",
SYSTEMS, MAN, AND CYBERNETICS (SMC),
2011 IEEE INTERNATIONAL CONFERENCE ON,
IEEE, 9 October 2011 (2011-10-09), pages
2946-2950, XP031999934, DOI:
10.1109/ICSMC.2011.6084119 ISBN:
978-1-4577-0652-3**

**Description**

**TECHNICAL FIELD OF THE INVENTION**

The present invention relates to processing of digital images, and more particularly to a method, a system and a device for generating more natural looking images from previously recorded images.

**BACKGROUND OF THE INVENTION**

Digital images from digital cameras are becoming more and more popular. Except perhaps in the case of artistic effects, it is desirable that images, including digital images, reveal all the detail in a scene without creating an unnatural look; but it is not obvious how to get details and contrast visible in the processed picture to be the same as those that can be perceived with the naked eye by an observer present at the scene.

An image is a 2-dimensional array of pixels values where each value encodes brightness. A colour image has 3 brightness values per pixel encoding respectively, a red value, a green value and a blue value (RGB).

One of the main problems is how to represent the very large range of values of light intensity (natural scenes may easily span a luminance range of 100,000:1) within the very limited range of values allowed to standard file formats like JPEG (256:1). Digital cameras generally do this by means of gamma correction as it can be found in [1,2,3]. Gamma correction is an extremely simplistic and generalist (i.e. image independent) mathematical model that helps to make the intensity histogram more uniform and which is designed to produce good results on average but which is not tailored to the specific statistics of individual images.

Moreover there are more complex solutions to enhance the contrast of digital images based on gamma correction.

Some published patents and patent applications, disclosing gamma correction and/or cumulative histogram processing are for example:

Patent application US-5473373-A: It describes an image capture and display apparatus e.g. for camcorder, still camera, scanner etc. which uses digital gamma correction device to perform linear correction of high and low intensity level signals and adjustable non-linear correction of medium intensity level signals with display of corrected signals.

Patent US-8422815-B2: It describes an image processing apparatus which has an input unit that receives original image. The local histogram regarding the brightness in local region of the image is calculated. The monotonically increasing function is determined with respect to cumulative frequency value in class of local cumulative histogram. The weighting function is determined with respect to monotonically increasing function. The conversion function of brightness of pixel is generated from monotonically increasing function. The brightness of pixel is converted based on the conversion function.

Patent US-7646931-B2: It describes a method involves adjusting an exposure data for a digital image, where the exposure data comprises a luminance value histogram. Adjustment data is produced for the digital image based on the adjusting of the exposure data. The adjustment data in a look-up table is stored, and the look-up table is stored in the digital image file, where the storing of the look-up table in the digital image file facilitates archiving of an original version of the digital image. Data representing the luminance value histogram is presented in the digital image file before processing.

Patent US-7289666-B2: It describes a method involves generating a cumulative histogram of an image from a raw histogram. A cumulative histogram path length of the image is determined from the cumulative histogram for estimating a parameter for local colour correction. The estimated parameter determines an amount of color correction when the image is to be color corrected. The parameter is small when a local color correction algorithm is already applied.

Patent US-7330287-B2: It describes a digital image data processing method in printer, involves moving mean level of digital image data towards expected value for printer or processing space, using gamma correction stage. Gain and offset of input image data are adjusted to occupy full input range of a printer or processing space. The shadow and highlight slopes of the image data, are adjusted to move image data distribution towards expected value for a typical image for the printer. A gamma correction stage is used to move the mean level of the image data towards that expected for the printer or processing space.

Patent application US-4931864-A: It describes a system has a device to fix an area within the overall picture produced from a video signal. A second device generates a picture of the area. A gamma converter converts the video signal and the conversion characteristics of the gamma converter are controlled in accordance with the fixed area. The control has a sampler to sample the video signal producing the area. A device produces a histogram from the samples and determines a sum distribution curve from the histogram for use in controlling the gamma conversion characteristics.

Patent US-8358351-B2: It describes a processor obtains an image representative of a physical scene, calculates an image processing parameter based on a metadata of the image. A primary slope value and a secondary slope value of a tone mapping curve are determined based on the generated image processing parameter. The primary slope value and the secondary slope value are representative of the slope of the tone mapping curve at two endpoints, respectively. The image is transformed according to the tone mapping curve. The slope values representative of low-light conditions are interpolated.

Patent US-8314847-B2: It describes a processor obtains image representative of physical scene and comprising image histogram metadata. An image processing parameter is calculated based on the distribution of the image histogram metadata. The slope values of tone mapping curve are determined based on the calculated image processing parameter. The slope values are representative of the slope of the tone mapping curve at respective endpoints. The image is transformed according to the tone mapping curve.

Chiu, Y.-S. et al, "Efficient Contrast Enhancement Using Adaptive Gamma Correction and Cumulative Intensity Distribution", Proc. IEEE Intl. Conf. on Systems, Man and Cybernetics (SMC), pp. 2946-2950, 2011, teaches an adaptive contrast enhancement that links the cumulative density distribution (CDF) of luminance with gamma correction.

US 2007/0104387 A1 discloses an adaptive contrast enhancement of images that results in more natural images. Analysis of the cumulative density function of the luminance histogram results in the generation of a cumulative density function of a second luminance histogram, based onto which the original image is enhanced.

However, the existing image processing solutions present different drawbacks. In most other solutions, although the methods applied to the images are based on similar techniques like different approaches to gamma correction or calculate histograms and cumulative histograms in different ways to adjust the ranges of luminance or contrast values, these methods are applied in a fixed manner to any image, without taking into account the particularities of each image. Most importantly, none of the existing solutions actually takes into account statistics data, psychophysical data and neurophysiological models on how the human perceives images and therefore current solutions do not get a natural adaptation of the images sufficiently similar to the human visual system, which results in those methods producing images which do not appear as natural as the ones obtained with the present invention.

The proposed embodiments of the invention stated below will overcome at least some of the drawbacks of the prior art solutions, providing a method, system and device that allows to record images that look more natural: details and contrast visible in the processed picture are the same as those that can be perceived with the naked eye by an observer present at the scene. The invention can be applied both on photographic and video images and on any environment that requires or can be applied image processing, for example, and in a non-limiting manner, photo cameras, video cameras, image editing software, etc.

## SUMMARY OF THE INVENTION

The problems found in prior art techniques are generally solved or circumvented, and technical advantages are generally achieved, by the disclosed embodiments which provide a method, system and device for generating more natural images.

This invention proposes a method, system and device that allows to record images that look more natural: details and contrast visible in the processed picture are the same as those that can be perceived with the naked eye by an observer present at the scene. It works for still images (pictures) as well as for moving images (video/cinema).

Therefore one of the problems solved by this invention is the representation of the very large range of values of light intensity within the very limited range of values allowed to standard file formats like JPEG, but, unlike gamma correction and abovementioned related approaches found in the prior art, adapts to the particularities of each image and produces results that look more natural even for challenging scenes. This is the case because the proposed invention has been developed to emulate basic properties of the human visual system: adaptation to natural image statistics, lightness perception, contrast normalization. The invention has been validated by two standard image quality metrics based on human visual perception, which show that our results are closest than those of any other method to the image that a human observer would perceive by looking directly at the scene.

In a first aspect, it is proposed a method for processing an image according to claim 1, the method being characterized by comprising the following steps performed in an apparatus for processing an image:

a) receiving a normalized image (I) (1)

b) computing a luminance (L) of said normalized image (I) (2);

c) computing a histogram (h) of said luminance (L) (10);

d) computing a cumulative histogram (H) of the said histogram (h) (10);

e) estimating a first parameter (Mid_X) related to the average of said cumulative histogram (H), a second slope parameter (Gamma_L) for small values of said cumulative histogram (H) and a third slope parameter (Gamma_H) for large values of said cumulative histogram (H) (20);

f) estimating a gamma correction function (Gamma) from said cumulative histogram (H) wherein said gamma correction function is a function of (Mid_X), (Gamma_L) and (Gamma_H) (30);

g) applying said gamma correction function (Gamma) to every image channel (R, G or B) and obtaining a output image ($I_{out}$) (4);

h) applying a contrast normalization process to said output image ($I_{out}$) and obtaining and final image ($I_{final}$) (5);

Consequently, according to the invention, a method, system, computer program and storage medium according to the independent claims are provided. Favorable embodiments are defined in the dependent claims. These and other aspects of the invention will be apparent from and elucidated with reference to the embodiments described hereinafter.

The proposed invention provides, among others, the following advantages:

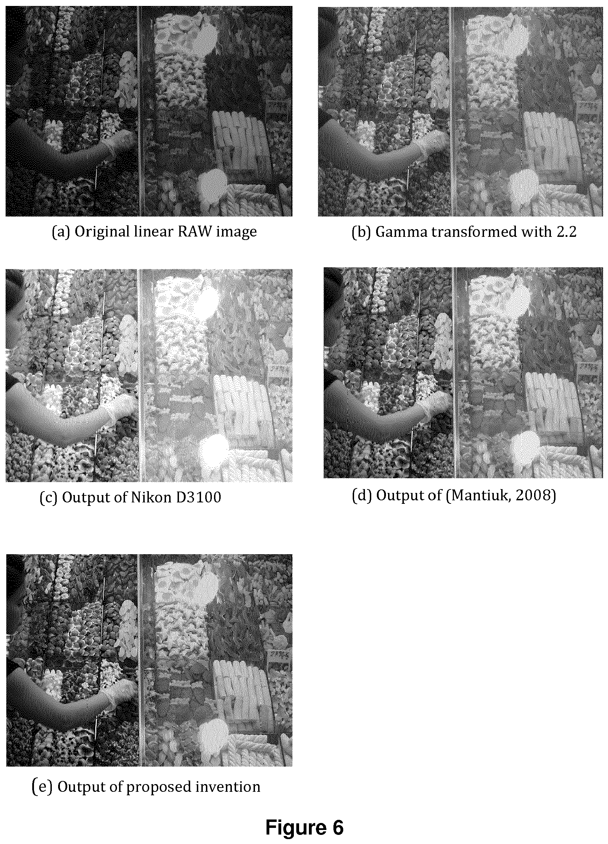

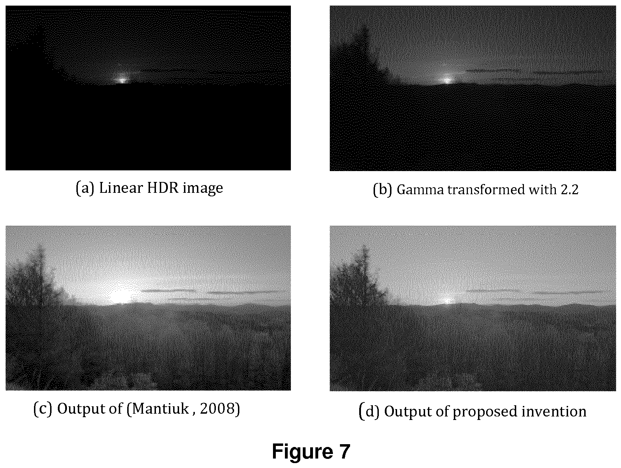

- The invention adapts to the particularities of each image and produces results that look natural, with realistic contrast and colors, even for challenging scenes, as figures 6 and 7 show.
- The invention has been validated by two standard image quality metrics based on human visual perception, which show that the results are closest than those of any other method to the image that a human observer would perceive by looking directly at the scene.
- The computations involved by this invention are very simple so this method could be implemented, as a nonlimiting example, in-camera for real-time applications without the need for any specialized hardware nor software.

- The potential application of the proposed invention is really quite enormous: any camera maker (mobile phone, photo, video, digital cinema) could adopt it simply by adding a software step to the camera image processing pipeline, without any need to modify the hardware (sensor, optics) in any way.
- It can also be implemented, as a nonlimiting example, as a post-processing tool on an image processing suite such as Adobe Photoshop® or a cinema postproduction package like Apple's Final Cut Pro®, using RAW picture data or HDR images as input.

## DESCRIPTION OF THE DRAWINGS

To complete the description that is being made and with the object of assisting in a better understanding of the characteristics of the invention, in accordance with a preferred example of practical embodiments thereof, accompanying said description as an integral part thereof, is a set of drawings wherein, by way of illustration and not restrictively, the following has been represented:

Figure 1: It shows a diagram of how the visual pipeline from capture to lightness perception can be conceptualized using two nonlinearities according to one embodiment of the invention.

Figure 2: It shows a flow diagram of main steps of the proposed method according to one embodiment of the invention.

Figure 3: It shows a flow diagram of the detailed steps of estimating the point-wise gamma according to one embodiment of the invention.

Figure 4: It shows an exemplary diagram of a log cumulative histogram according to one embodiment of the invention.

Figure 5: It shows an exemplary diagram of a final gamma curve calculated after estimating Mid_X, Gamma_L and Gamma_H parameters according to one embodiment of the invention.

Figure 6: It shows some comparison of images where it can be appreciated that the present invention shows more natural results and particularly better contrast than other methods. The image (a) is obtained by demosaicing and camera characterization of the RAW sensor data and linearly scaling to the display range. Then a gamma transform with gamma value 2.2 is applied on (a) to get image (b). (c) is the JPEG image created by the Nikon D3100® camera. Image (d) is the output of Mantiuk tone mapping operator as it is explained in [10] and (e) is the output of the proposed invention when applied to the RAW images.

Figure 7: It shows another comparison of HDR images where it can be appreciated that the present invention shows more natural results and particularly better contrast than other methods. The image (a) is linear HDR image obtained form a sensor data. Then a gamma transform with gamma value 2.2 is applied on (a) to get image (b). Image (d) is the output of Mantiuk tone mapping operator according to [10] and (e) is the output of the proposed invention when applied to the linear HDR image.

## DETAILED DESCRIPTION OF THE INVENTION

The present invention may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope. In the following description, for purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

Therefore the invention proposes a method, system and device capable of generating more natural images from an initial image obtained from a digital camera, digital video camera, etc.

The invention finds, for each given image, the particular transform function producing an output where the levels are more evenly distributed over the available range, while complying with natural image statistics data, psychophysical data and neurophysiological models. The method consists of three main stages:

1) Using natural image statistics, some key features of the cumulative histogram of the input intensity image are computed.

2) These features are exploited to perform a transform over the intensity values that comply with users' preference data obtained through psychophysical tests performed in our lab.

3) Finally, the output of the previous stage goes through a contrast-normalization procedure that replicates efficient coding behavior documented at retinal and cortical levels in neuroscience works.

The computations involved by this invention are very simple so this method could be implemented in-camera for real-time applications without the need for any specialized hardware or software.

Any camera maker (mobile phone, photo, video, digital cinema) could adopt this invention simply by adding a software step to the camera image processing pipeline, without any need to modify the hardware (sensor, optics) in any way. It can also be implemented as a post-processing tool on an image-processing suite, using RAW picture data or HDR images as input or any other image format. Therefore, the exploitation prospects are potentially quite vast.

### Natural image statistics

In the vision science community there is the prevalent view, backed by a substantial body of neurophysiological evidence, that the visual system is organized so as to represent as efficiently as possible the images it normally sees, called natural images as it is explained in [4]. It can be said that the human visual system has evolved so as to adapt best to the statistics of natural images, providing the best possible representation for them. Several works on natural image statistics, e.g. [5, 6] report that the average shape of the histogram for a natural image is triangular in log-log coordinates: it increases linearly up to a peak, obtained for an image intensity value of M (related to the average of the intensity), then decreases linearly with a slightly different slope. This implies that the cumulative histogram, being simply the integral of the histogram, will also be a piece-wise linear function in log-log coordinates, increasing linearly with some slope Gamma_L until the intensity value Mid_X, then increasing linearly with a different slope Gamma_H. In the method of this invention it is used this insight from the abovementioned results on natural image statistics to estimate, for the input image, the particular values of Mid_X, Gamma_L and Gamma_H that best fit the specific histogram of the image. That is, instead of using fixed values of Mid_X, Gamma_L and Gamma_H that may represent well the average statistics of natural images, it tailors these values to the particular image at hand. This is also supported by neurophysiological evidence [7] showing that the retina adapts to the light intensity distribution over the image.

### Histogram equalization

Natural scenes tend to have a luminance distribution that is heavily concentrated in the low luminance levels. This is especially true for high dynamic range images according to [9]. The result is that high dynamic range images tend to be dominated by dark, low contrast regions. This problem can be mitigated by a process called histogram equalization that flattens the luminance distribution of an image. This technique is well established and is effective at increasing the contrast, and in turn, the detail visible in an image. Complete histogram equalization is achieved by computing the cumulative histogram of an image and applying this as a point wise non-linearity as follows where H is the cumulative histogram and *i* denotes a pixel's intensity.

$$I^* = H(i)$$

Although complete histogram equalization is highly effective at increasing image contrast, it can lead to very sharp changes in contrast and frequently produces unnatural looking images. Thus some form of constrained histogram equalization is necessary. One approach is to apply a smooth function that approximates the cumulative histogram. In this invention it is applied a smooth function that is derived from the statistics of natural scenes. The benefit of this function is that the function is smooth and provides a precise approximation of the statistics of any image.

### Lightness perception

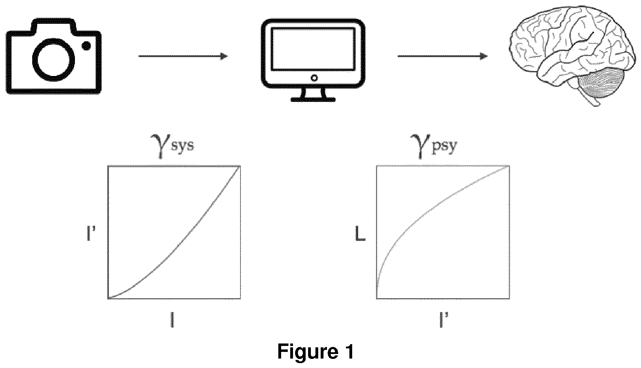

Figure 1 shows that the visual pipeline from capture to perception can be conceptualized using two nonlinearities. The first is system gamma: the end-to-end exponent the described the relationship between the captured image, and the one displayed on a given monitor. The second is the perceptual function that describes the nonlinear relationship between a displayed luminance and the perception of that luminance.

$$I_{disp} = I^{\gamma_{sys}}$$

The second function is the relationship between real world luminance (e.g. as displayed on a monitor) and perception. In this invention, in a preferred implementation, it is used the CIE color model that models lightness perception using an exponent of 0.45 as it is explained in [8], although other values are possible.

$$L = (I_{disp})^{\gamma_{psy}}$$

If the system gamma is the inverse of the perceptual gamma then the initial image *I* can be said to be proportional to the final perception of luminance. If not, then an additional manipulation is necessary to ensure equivalence

$$L = I^{\gamma_{adj}}$$

where

$$\gamma^{adj} = 1/\gamma_{sys} \ \gamma_{psy}$$

In the case of cinema displays, the system gamma is 2.2 which is the inverse of the perceptual gamma 0.45. Thus $\gamma^{adj}$ is equal to one and no correction is necessary.

### Contrast normalization

In the neuroscience literature there is abundant neurophysiological evidence [1] that the visual system is performing an operation called contrast normalization, in which the magnitude called contrast (the difference between light intensity and its mean value) is divided by a factor depending on the standard deviation of the light intensity. This rescaling already occurs at the retina and optimizes information transmission and coding efficiency according to [1]. Given that contrast normalization is a key element of the human visual system it has been incorporated into the invention with the following final stage:

$$I_{final}(x) = I_{mean}(x) + (I_{out}(x) - I_{mean}(x)) * (k/sigma)$$

or

$$I_{final} = I_{mean}(x) + (I_{out}(x) - I_{mean}(x)) * (2-sigma(x))$$

where $x$ is a pixel, $I_{out}(x)$ is the value at pixel $x$ computed at the previous stage of the method, $I_{mean}(x)$ is the local mean of $I$, $k$ is a constant, *sigma* is the standard deviation of $I$ (computed globally in the above first equation and locally in the second one), and $I_{final}(x)$ is the final output value of our method for pixel $x$.

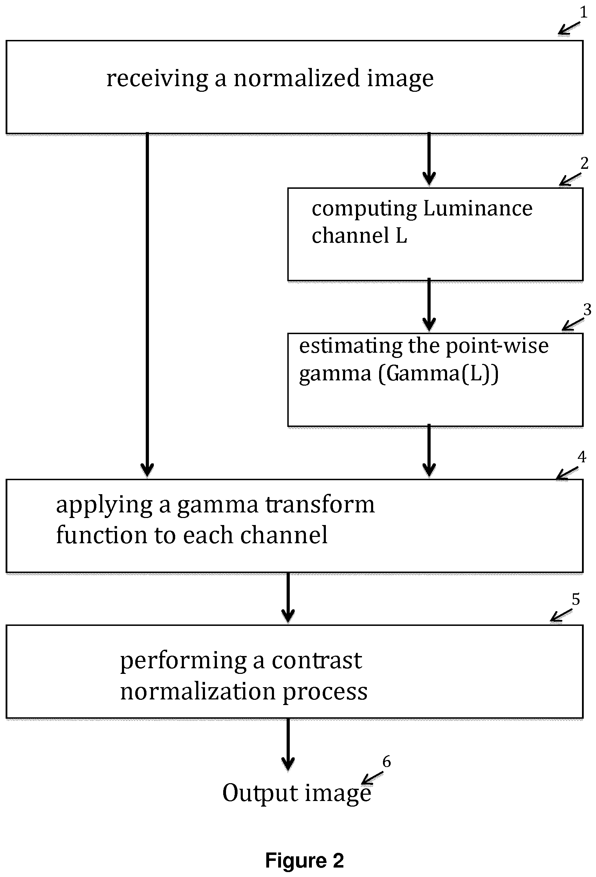

Figure 2 shows a schematic diagram of the proposed invention. The input image obtained can be a RAW, high dynamic range (HDR) image or any other format image. Then the Luminance (L) of the image is calculated and a continuous point-wise gamma is computed that depends on the image intensity.

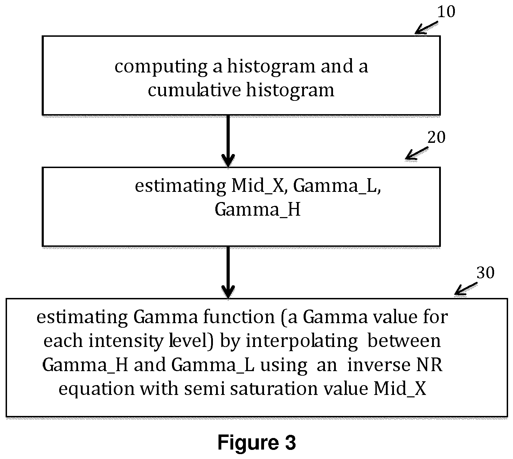

Figure 3 shows the detailed steps of estimating the point-wise gamma. The cumulative histogram is calculated according to the pseudo-code given below

*Index = logspace(-6,0,2^pow);  pow =12,16 or 18*

*Histo = histogram(L, Index)*

*H = cumulative_histogram(Histo)*

*logH = log2(H)*

*logIndex = log2(Index)*

where 'Index' is the intensity range in a logarithmic scale of 6 orders of magnitude (enough for most scenes), with the original image coded in 'pow' bits (typically 12, 16 or 18). Other values are possible.

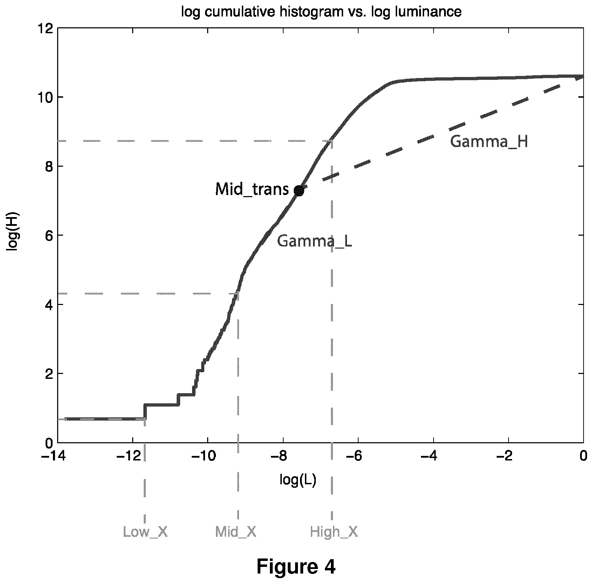

Figure 4 shows a log cumulative histogram. Along the X-axis is the logarithm of the luminance component of the input image. Along the y-axis is the logarithm of the pixel count of the input image. The pseudo-code for estimating Gamma_L, Gamma_H, Mid_X is given below.

*Low_Y = max (1, min(logH))*

*Low_X = {x : logH(x) = Low_Y}.*

*High_Y  = log2 (0.9\*N); N=total pixel count*

*High_X = {x : logH(x) = High_Y}.*

*Mid_X  = High_X  - (High_X -Low_X)/2*

*Mid_trans_X = High_X – (High_X – Mid_X)/3*

*Mid_trans_Y = logH(Mid_trans_X)*

*MinLy = Mid_trans_Y – 1*

*MinLx = {x : logH(x) = MinLy}.*

*Gamma_L = (Mid_trans_Y - MinLy) / (Mid_trans_X - MinLx)*

*Gamma_H = (Mid_trans_X – max (logH)) / (Mid_trans_X)*

where in the computation of High Y it uses a value of 0.9 because it works well in practice, but other values can be used as well.

The calculated points are also marked in the figure 4.

Now the continuous Gamma is computed by interpolating Gamma_H and Gamma_L with a inverse Naka-Rushton equation whose semi saturation is Mid_X. The pseudo-code is given below.

$$Index2 = linspace (0,1,2^{\wedge}pow)$$

$$Index\_NR (Index2) = Index2 / (Index2 + Mid\_X)$$

$$Inv\_Index\_NR (Index2) = 1\text{-}Index\_NR$$

$$Gamma\ (Index2) = Inv\_Index\_NR\ (Index)\ *\ (Gamma\_L -$$

$$Gamma\_H) + Gamma\_H$$

where 'Index2' is the original range [0,1] (because the original image was normalized, its range is always [0,1]) in linear scale, quantized using 'pow' bits.

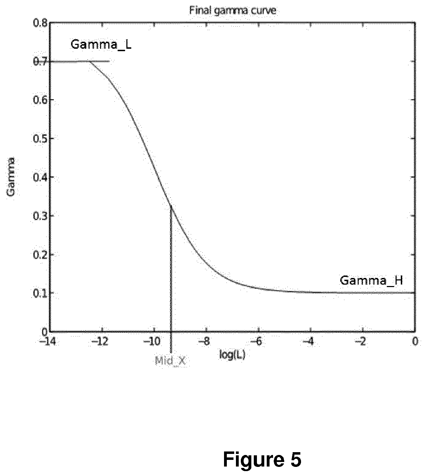

Figure 5 shows an exemplary diagram of a final gamma curve calculated after estimating Mad_X, Gamma_L and Gamma_H parameters according to one embodiment of the invention. Along the X-axis is the logarithm of the luminance component of the input image. Along the y-axis are the Gamma values.

With the estimated continuous and intensity dependent Gamma values each pixel x of the input image is transformed as shown in the equation below.

$$I_{out}(x) = I_{in}(x)^{(Gamma(lin(x)))};\ I = \{R,\ G,\ B\}$$

The approach is extended to videos by controlling the sudden change in Gamma_L and Gamma_H values and only allowing a smooth transition. Also the Mid_X value is allowed to change smoothly.

In the final stage of the invention a contrast enhancement is performed. The contrast normalization can be performed either by a global standard deviation (sigma) as shown in the first equation, or by a local standard deviation (sigma(x)) as shown in the second equation .

$$I_{final}\ (x)= I_{mean}\ (x)+(I_{out}\ (x)\text{-}I_{mean}\ (x))^*(k/sigma) \qquad (1)$$

$$I_{final}=I_{mean}\ (x)+(I_{out}\ (x)\text{-}I_{mean}\ (x))^*(2\text{-}sigma(x)) \qquad (2)$$

Where x is the pixel position, k has a preferred value of 0.33 and $I_{mean}$ is obtained by convolving the image $I_{out}$ with a kernel w, which is a weighted average of two Gaussian kernels with a preferred standard deviation of 25 and 5 respectively. These numerical values have been found to work well, but other values are also possible.

**References**

[1] Brenner, Naama, William Bialek, and Rob de Ruyter van Steveninck. "Adaptive rescaling maximizes information transmission." Neuron 26.3 (2000): 695-702.

[2] Carandini, Matteo, and David J. Heeger. "Normalization as a canonical neural computation." Nature Reviews Neuroscience 13.1 (2011): 51-62.

[3] Kastner, David B., and Stephen A. Baccus. "Insights from the retina into the diverse and general computations of adaptation, detection, and prediction." Current opinion in neurobiology 25 (2014): 63-69.

[4] Olshausen, Bruno A., and David J. Field. "Vision and the coding of natural images." American Scientist 88.3 (2000): 238-245.

[5] Ruderman, Daniel L. "The statistics of natural images." Network: computation in neural systems 5.4 (1994): 517-548.

[6] Huang, Jinggang, and David Mumford. "Statistics of natural images and models." Computer Vision and Pattern Recognition, 1999. IEEE Computer Society Conference on.. Vol. 1. IEEE, 1999.

[7] Smirnakis, Stelios M., et al. "Adaptation of retinal processing to image contrast and spatial scale." Nature 386.6620 (1997): 69-73.

[8] Poynton, Charles. Digital video and HD: Algorithms and Interfaces. Elsevier, 2012.

[9] Kane, Bartalmio. Is there a preference for linearity when viewing natural images? SPIE 2015

[10] Mantiuk, Rafał, Scott Daly, and Louis Kerofsky. "Display adaptive tone mapping." ACM Transactions on Graphics (TOG). Vol. 27. No. 3. ACM, 2008.

**Claims**

1. A method for processing an image, the method comprising the following steps performed in an apparatus for processing an image:

   a) receiving an image, dividing it by its maximum value so that it becomes a normalized image (I) in the range [0,1] (1)
   b) for every R, G and B channel of said image:

      b1) computing a luminance (L) (2);
      b2) computing a normalized histogram (h) of said luminance (L) (10);
      b3) computing a cumulative histogram (H) of the said normalized histogram (h) (10);
      b4) estimating a first parameter (Mid_X) related to the average of said cumulative histogram (H), a second slope parameter (Gamma_L) for small values of said cumulative histogram (H) and a third slope parameter (Gamma_H) for large values of said cumulative histogram (H) (20);
      b5) estimating a gamma correction function (Gamma) from said cumulative histogram (H) wherein said gamma correction function is a function of (Mid_X), (Gamma_L) and (Gamma_H) (30);

   c) computing said gamma correction function (Gamma) to every image channel (R, G or B) and obtaining a output image ($I_{out}$) (4);
   d) computing a contrast normalization process to said output image ($I_{out}$) and obtaining and final image ($I_{final}$) (5);

2. A method according to claim 1, where the image received is a RAW or a high dynamic range (HDR) image.

3. A method according to claim 1, where the normalized histogram (h) is computing in accordance with a pseudo-code:

$$Index\ = logspace(-6,0,2^\wedge pow);$$
$$h = histogram(L, Index)$$

where Index is the intensity range in a logarithmic scale of 6 orders of magnitude, with the original image coded in pow bits preferably 12, 16 or 18.

4. A method according to claim 3, where the Mid_X parameter estimating in accordance with a formula:

$$logH = log2(H)$$
$$Low\_Y = max\ (1, min(logH))$$
$$Low\_X = \{x : logH(x) = Low\_Y\}.$$
$$High\_Y = log2\ (0.9*N);$$
$$High\_X = \{x : logH(x) = High\_Y\}.$$
$$Mid\_X = High\_X\ - (High\_X -Low\_X)/2$$

where H is said cumulative histogram.

5. A method according to claim 1, where the gamma correction function (Gamma) is estimated as a function of (Mid_X), (Gamma_L) and (Gamma_H) by generating Gamma_H and Gamma_L with a inverse Naka-Rushton equation whose semi saturation is Mid_X.

6. A method according to claim 5, where the gamma correction function (Gamma) is generated in accordance with a pseudo-code:

$$Index2 = linespace(0,1,2^\wedge pow)$$

$$Index\_NR\ (Index2) = Index2\ /\ (Index2 + Mid\_X)$$

$$Inv\_Index\_NR\ (Index2) = 1\text{-}Index\_NR$$

$$Gamma\ (Index2) = Inv\_Index\_NR\ (Index) * (Gamma\_L - Gamma\_H) +$$

$$Gamma\_H$$

where Index2 is the original range [0,1] in the original normalized image in linear scale, quantized using 'pow' bits.

7. A method according to claim 1, where the contrast normalization process for obtaining the final image ($I_{final}$) is performed by a global standard deviation (sigma).

8. A method according to claim 7, where the contrast normalization process is performed in accordance with a formula:

$$I_{final}(x) = I_{mean}(x) + (I_{out}(x) - I_{mean}(x)) * (k/sigma)$$

where x is a pixel, $I_{out}(x)$ is the value at pixel x computed in the stage c), $I_{mean}(x)$ is the local mean of I, k is a constant and sigma is the standard deviation of the initial image I.

9. A method according to claim 8, where constant k is equal to 0.33

10. A method according to claim 1, where the contrast normalization process is performed by a local standard deviation (sigma (x)).

11. A method according to claim 9, where the contrast normalization process is performed in accordance with a formula:

$$I_{final}(x) = I_{mean}(x) + (I_{out}(x) - I_{mean}(x)) * (2 - sigma(x))$$

where x is a pixel, $I_{out}(x)$ is the value at pixel x computed in the stage c), $I_{mean}(x)$ is the local mean of I and sigma is the standard deviation of the initial image I.

12. A computer system for processing an image, the computer program comprising:

   a) receiving means for receiving an image, dividing it by its maximum value so that it becomes a normalized image (I) in the range [0,1]
   b) for every R, G and B channel of said image:

   b1) means for computing a luminance (L);
   b2) means for computing a normalized histogram (h) of said luminance (L);
   b3) means for computing a cumulative histogram (H) of the said normalized histogram (h);
   b4) means for estimating a first parameter (Mid_X) related to the average of said cumulative histogram (H), a second slope parameter (Gamma_L) for small values of said cumulative histogram (H) and a third slope parameter (Gamma_H) for large values of said cumulative histogram (H);
   b5) estimating a gamma correction function (Gamma) from said cumulative histogram (H) wherein said gamma correction function is a function of (Mid_X), (Gamma_L) and (Gamma_H);

   c) means for computing said gamma correction function (Gamma) to every image channel (R, G or B) and obtaining a output image ($I_{out}$);
   d) means for computing a contrast normalization process to said output image ($I_{out}$) and obtaining and final image ($I_{final}$);

13. A digital data storage medium storing a computer program comprising computer-executable instructions for performing the method according to any of the claims 1-10, when the program is run on a computer.

**Patentansprüche**

1. Verfahren zur Verarbeitung eines Bildes, wobei das Verfahren die folgenden Schritte umfasst, die in einer Vorrichtung zur Verarbeitung eines Bildes durchgeführt werden:

 a) Empfangen eines Bildes, Teilen durch seinen Maximalwert, so dass es zu einem normierten Bild (I) im Bereich [0,1] (1) wird
 b) für jeden R-, G- und B-Kanal des Bildes:

  b1) Berechnen einer Leuchtdichte (L) (2);
  b2) Berechnen eines normierten Histogramms (h) der Leuchtdichte (L) (10);
  b3) Berechnen eines kumulativen Histogramms (H) des normierten Histogramms (h) (10);
  b4) Schätzen eines ersten Parameters (Mid_X), der sich auf den Durchschnitt des kumulativen Histogramms (H) bezieht, eines zweiten Steigungsparameters (Gamma_L) für kleine Werte des kumulativen Histogramms (H) und eines dritten Steigungsparameters (Gamma_H) für große Werte des kumulativen Histogramms (H) (20); b5) Schätzen einer Gammakorrekturfunktion (Gamma) aus dem kumulativen Histogramm (H), wobei die Gammakorrekturfunktion eine Funktion von (Mid_X), (Gamma_L) und (Gamma_H) (30) ist;

 c) Berechnen der Gammakorrekturfunktion (Gamma) für jeden Bildkanal (R, G oder B) und Erhalten eines Ausgabebildes ($I_{out}$) (4);
 d) Berechnen eines Kontrastnormierungsprozesses zu dem Ausgabebild ($I_{out}$) und Erhalten des Endbildes ($I_{final}$) (5).

2. Verfahren nach Anspruch 1, wobei das empfangene Bild ein RAW- oder ein High Dynamic Range (HDR)-Bild ist.

3. Verfahren nach Anspruch 1, wobei das normierte Histogramm (h) gemäß einem Pseudocode berechnet wird:

$$Index = logspace(-6,0,2^\wedge pow);$$
$$h = Histogramm(L, Index)$$

wobei Index der Intensitätsbereich in einer logarithmischen Skala von 6 Größenordnungen ist, wobei das Originalbild in pow-Bits kodiert ist, vorzugsweise 12, 16 oder 18.

4. Verfahren nach Anspruch 3, wobei der Mid_X-Parameter gemäß einer Formel schätzt:

$$logH = log2(H)$$
$$Low\_Y = max\ (1,\ min(logH))$$
$$Low\_X = \{x : logH(x) = Low\_Y\}.$$
$$High\_Y = log2\ (0{,}9*N);$$
$$High\_X = \{x : logH(x) = High\_Y\}.$$
$$Mid\_X = High\_X - (High\_X - Low\_X)/2$$

wobei H das kumulative Histogramm ist.

5. Verfahren nach Anspruch 1, wobei die Gammakorrekturfunktion (Gamma) als Funktion von (Mid_X), (Gamma_L) und (Gamma_H) geschätzt wird, indem Gamma_H und Gamma_L mit einer inversen Naka-Rushton-Gleichung erzeugt werden, deren Halbsättigung Mid_X ist.

6. Verfahren nach Anspruch 5, wobei die Gammakorrekturfunktion (Gamma) gemäß einem Pseudocode erzeugt wird:

*Index2 = Zeilenabstand (0,1,2^pow)*

*Index_NR (Index2) = Index2/ (Index2 + Mid_X)*

*Inv_Index_NR (Index2)= 1-Index_NR*

*Gamma (Index2) = Inv_Index_NR (Index) \* (Gamma_L - Gamma_ H) +*
*Gamma_H*

wobei Index2 der ursprüngliche Bereich [0,1] im normierten Originalbild in linearer Skala ist, quantisiert mit 'pow' Bits.

7. Verfahren nach Anspruch 1, wobei der Kontrastnormierungsprozess zum Erhalten des Endbildes ($I_{final}$) durch eine globale Standardabweichung (sigma) durchgeführt wird.

8. Verfahren nach Anspruch 7, wobei der Kontrastnormierungsprozess gemäß einer Formel durchgeführt wird:

$$I_{final}(x) = I_{mean}(x) + (I_{out}(x) - I_{mean}(x)) * (k/sigma)$$

wobei x ein Pixel ist, $I_{out}(x)$ der Wert bei Pixel x ist, der in der Stufe c) berechnet wird, $I_{mean}(x)$ das lokale Mittel von I ist, k eine Konstante ist und sigma die Standardabweichung des Ausgangsbildes I ist.

9. Verfahren nach Anspruch 8, wobei die Konstante k gleich 0,33 ist.

10. Verfahren nach Anspruch 1, wobei der Kontrastnormierungsprozess durch eine lokale Standardabweichung (sigma (x)) durchgeführt wird.

11. Verfahren nach Anspruch 9, wobei der Kontrastnormierungsprozess gemäß einer Formel durchgeführt wird:

$$I_{final}(x) = I_{mean}(x) + (I_{out}(x) - I_{mean}(x)) * (2 - sigma(x))$$

wobei x ein Pixel ist, $I_{out}(x)$ der Wert bei Pixel x ist, der in der Stufe c) berechnet wird, $I_{mean}(x)$ das lokale Mittel von I ist und sigma die Standardabweichung des Ausgangsbildes I ist.

12. Computersystem zur Verarbeitung eines Bildes, wobei das Computerprogramm Folgendes umfasst:

a) Empfangsmittel zum Empfangen eines Bildes, Teilen durch seinen Maximalwert, so dass es zu einem normierten Bild (I) im Bereich [0,1] wird

b) für jeden R-, G- und B-Kanal des Bildes:

b1) Mittel zum Berechnen einer Leuchtdichte (L);
b2) Mittel zum Berechnen eines normierten Histogramms (h) der Leuchtdichte (L); b3) Mittel zum Berechnen eines kumulativen Histogramms (H) des normierten Histogramms (h);
b4) Mittel zum Schätzen eines ersten Parameters (Mid_X), der sich auf den Durchschnitt des kumulativen Histogramms (H) bezieht, eines zweiten Steigungsparameters (Gamma_L) für kleine Werte des kumulativen Histogramms (H) und eines dritten Steigungsparameters (Gamma_H) für große Werte des kumulativen Histogramms (H); b5) Schätzen einer Gammakorrekturfunktion (Gamma) aus dem kumulativen Histogramm (H), wobei die Gammakorrekturfunktion eine Funktion von (Mid_X), (Gamma_L) und (Gamma_H) ist;

c) Mittel zum Berechnen der Gammakorrekturfunktion (Gamma) für jeden Bildkanal (R, G oder B) und zum Erhalten eines Ausgabebildes ($I_{out}$);
d) Mittel zum Berechnen eines Kontrastnormierungsprozesses zu dem Ausgabebild ($I_{out}$) und zum Erhalten des Endbildes ($I_{final}$).

13. Digitales Datenspeichermedium, das ein Computerprogramm speichert, umfassend computerausführbare Anweisungen zur Durchführung des Verfahrens nach einem der Ansprüche 1-10, wenn das Programm auf einem Computer ausgeführt wird.

**Revendications**

1.  Procédé pour le traitement d'une image, le procédé comprenant les étapes suivantes réalisées dans un appareil pour le traitement d'une image :

    a) recevoir une image, la diviser par sa valeur maximale pour qu'elle devienne une image normalisée (I) dans la plage [0,1] (1)
    b) pour chaque canal R, G et B de ladite image :

    b1) calculer une luminance (L) (2) ;
    b2) calculer un histogramme normalisé (h) de ladite luminance (L) (10) ;
    b3) calculer un histogramme cumulé (H) dudit histogramme normalisé (h) (10) ;
    b4) estimer un premier paramètre (Mid_X) relatif à la moyenne dudit histogramme cumulé (H), un deuxième paramètre de pente (Gamma_L) pour de petites valeurs dudit histogramme cumulé (H) et un troisième paramètre de pente (Gamma_H) pour de grandes valeurs dudit histogramme cumulé (H) (20) ; b5) l'estimation d'une fonction de correction de gamma (Gamma) à partir dudit histogramme cumulé (H) dans laquelle ladite fonction de correction de gamma est une fonction de (Mid_X), (Gamma_L) et (Gamma_H) (30) ;

    c) calculer ladite fonction de correction de gamma (Gamma) à chaque canal d'image (R, G ou B) et obtenir une image de sortie ($I_{sortie}$) (4) ;
    d) calculer un procédé de normalisation du contraste à ladite image de sortie ($I_{sortie}$) et obtenir une image finale ($I_{finale}$) (5) ;

2.  Procédé selon la revendication 1, où l'image reçue est une image RAW ou en plage dynamique élevée (HDR).

3.  Procédé selon la revendication 1, où l'histogramme normalisé (h) est calculé selon un pseudo-code :

    *Index = logspace (-6,0,2^pow) ;*

    *h = histogramme(L, Index)*

    où Index est la plage d'intensité dans une échelle logarithmique de 6 ordres de magnitude, avec l'image originale codée en bits pow de préférence 12, 16 ou 18.

4.  Procédé selon la revendication 3, où l'estimation du paramètre Mid_X selon une formule :

    *logH = log2(H)*

    *Low_Y = max (1, min(logH))*

    *Low_X = {x : logH(x) = Low_Y}.*

    *High_Y= log2 (0.9*N);*

    *High_X = {x: logH(x) = High_Y}.*

    *Mid_X = High_X - (High_X -Low_X)/2*

    où H est ledit histogramme cumulé.

5.  Procédé selon la revendication 1, où la fonction de correction de gamma (Gamma) est estimée comme une fonction de (Mid_X), (Gamma_L) et (Gamma_H) par la génération de Gamma_H et Gamma_L avec une équation inversée Naka-Rushton dont la semi saturation est Mid_X.

6.  Procédé selon la revendication 5, où la fonction de correction de gamma (Gamma) est générée selon un pseudo-code :

$$Index2 = linespace\ (0,1,2\hat{}pow)$$

$$Index\_NR\ (Index2) = Index2 / (Index2 + Mid\_X)$$

$$Inv\_Index\_NR\ (Index2) = 1\text{-}Index\_NR$$

$$Gamma\ (Index2) = Inv\_Index\_NR\ (Index)\ *\ (Gamma\_L - Gamma\_H) + Gamma\_H$$

où Index2 est la plage originale [0,1] dans l'image normalisée originale à l'échelle linéaire, quantifiée en utilisant des bits « pow ».

7. Procédé selon la revendication 1, où le procédé de normalisation de contraste pour obtenir l'image finale ($I_{finale}$) est réalisé par un écart type global (sigma).

8. Procédé selon la revendication 7, où le procédé de normalisation du contraste est réalisé selon une formule :

$$I_{finale}(x) = I_{moyenne}(x) + (I_{sortie}(x)\ I_{moyenne}(x))\ *\ (k/sigma)$$

où x est un pixel, $I_{sortie}(x)$ est la valeur à un pixel x calculé à l'étape c), $I_{moyenne}(x)$ est la moyenne locale de I, k est une constante et sigma est l'écart type de l'image initiale I.

9. Procédé selon la revendication 8, où la constante k est égale à 0,33

10. Procédé selon la revendication 1, où le procédé de normalisation du contraste est réalisé par un écart type local (sigma (x)).

11. Procédé selon la revendication 9, où le procédé de normalisation du contraste est réalisé selon une formule :

$$I_{finale}(x) = I_{moyenne}(x) + (I_{sortie}(x)\ I_{moyenne}(x))\ *\ (2 - sigma(x))$$

où x est un pixel, $I_{sortie}(X)$ est la valeur à un pixel x calculé à l'étape c), $I_{moyenne}(X)$ est la moyenne locale de I et sigma est l'écart type de l'image initiale I.

12. Système informatique pour le traitement d'une image, le programme informatique comprenant :

a) des moyens de réception pour recevoir une image, pour la diviser par sa valeur maximale pour qu'elle devienne une image normalisée (I) dans la plage [0,1]
b) pour chaque canal R, G et B de ladite image :

b1) des moyens pour calculer une luminance (L) ;
b2) des moyens pour calculer un histogramme normalisé (h) de ladite luminance (L) ; b3) des moyens pour calculer un histogramme cumulé (H) dudit histogramme normalisé (h) ;
b4) des moyens pour l'estimation d'un premier paramètre (Mid_X) relatif à ladite moyenne dudit histogramme cumulé (H), un deuxième paramètre de pente (Gamma_L) pour de petites valeurs dudit histogramme cumulé (H) et un troisième paramètre de pente (Gamma_H) pour de grandes valeurs dudit histogramme cumulé (H) ; b5) l'estimation d'une fonction de correction de gamma (Gamma) à partir dudit histogramme cumulé (H) dans laquelle ladite fonction de correction de gamma est une fonction de (Mid_X), (Gamma_L) et (Gamma_H) ;

c) des moyens pour calculer ladite fonction de correction de gamma (Gamma) à chaque canal d'image (R, G ou B) et pour obtenir une image de sortie ($I_{sortie}$) ;
d) des moyens pour calculer un procédé de normalisation du contraste à ladite image de sortie ($I_{sortie}$) et pour obtenir une image finale ($I_{finale}$) ;

13. Moyen de stockage de données numériques stockant un programme informatique comprenant des instructions exécutables par ordinateur pour réaliser le procédé selon l'une quelconque des revendications 1-10, lorsque le programme est lancé sur un ordinateur.

Figure 1

receiving a normalized image                                              1

computing Luminance
channel L                                                                 2

estimating the point-wise
gamma (Gamma(L))                                                          3

applying a gamma transform
function to each channel                                                  4

performing a contrast
normalization process                                                     5

Output image                                                              6

**Figure 2**

Figure 3

Figure 4

**Figure 5**

(a) Original linear RAW image

(b) Gamma transformed with 2.2

(c) Output of Nikon D3100

(d) Output of (Mantiuk, 2008)

(e) Output of proposed invention

## Figure 6

(a) Linear HDR image

(b) Gamma transformed with 2.2

(c) Output of (Mantiuk , 2008)

(d) Output of proposed invention

**Figure 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5473373 A
- US 8422815 B2
- US 7646931 B2
- US 7289666 B2
- US 7330287 B2
- US 4931864 A
- US 8358351 B2
- US 8314847 B2
- US 20070104387 A1

### Non-patent literature cited in the description

- **CHIU, Y.-S. et al.** Efficient Contrast Enhancement Using Adaptive Gamma Correction and Cumulative Intensity Distribution. *Proc. IEEE Intl. Conf. on Systems, Man and Cybernetics (SMC),* 2011, 2946-2950
- **BRENNER ; NAAMA ; WILLIAM BIALEK ; ROB DE RUYTER VAN STEVENINCK.** Adaptive rescaling maximizes information transmission. *Neuron,* 2000, vol. 26.3, 695-702
- **CARANDINI ; MATTEO ; DAVID J. HEEGER.** Normalization as a canonical neural computation. *Nature Reviews Neuroscience,* 2011, vol. 13.1, 51-62
- **KASTNER ; DAVID B. ; STEPHEN A. BACCUS.** Insights from the retina into the diverse and general computations of adaptation, detection, and prediction. *Current opinion in neurobiology,* 2014, vol. 25, 63-69
- **OLSHAUSEN ; BRUNO A. ; DAVID J. FIELD.** Vision and the coding of natural images. *American Scientist,* 2000, vol. 88.3, 238-245
- **RUDERMAN ; DANIEL L.** The statistics of natural images. *Network: computation in neural systems,* 1994, vol. 5.4, 517-548
- **HUANG ; JINGGANG ; DAVID MUMFORD.** Statistics of natural images and models. *Computer Vision and Pattern Recognition,* 1999
- IEEE Computer Society Conference on.. IEEE, 1999, vol. 1
- **SMIRNAKIS ; STELIOS M. et al.** Adaptation of retinal processing to image contrast and spatial scale. *Nature,* 1997, vol. 386.6620, 69-73
- **POYNTON ; CHARLES.** Digital video and HD: Algorithms and Interfaces. Elsevier, 2012
- **KANE ; BARTALMIO.** Is there a preference for linearity when viewing natural images?. SPIE, 2015